# FASCICULE DE BREVET EUROPEEN

(11) **EP 2 999 979 B1**
(45) Date de publication et mention de la délivrance du brevet: **10.11.2021**
(21) Numéro de dépôt: 14727603.4
(22) Date de dépôt: 30.04.2014
(51) Int. Cl.: G01V 3/02, G01V 15/00, H01R 13/447, H01R 13/70

(54) **BORNE DE DÉTECTION D'UN RÉSEAU OPTIQUEMENT INVISIBLE, INSTALLATION COMPRENANT UNE TELLE BORNE DE DÉTECTION, ET PROCÉDÉ DE DÉTECTION D'UN RÉSEAU OPTIQUEMENT INVISIBLE**
ENDGERÄT ZUR DETEKTION EINES OPTISCH UNSICHTBAREN NETZWERKS, ANLAGE MIT SOLCH EINEM DETEKTIONSENDGERÄT UND VERFAHREN ZUR DETEKTION EINES OPTISCH UNSICHTBAREN NETZWERKS
TERMINAL FOR DETECTING AN OPTICALLY INVISIBLE NETWORK, FACILITY COMPRISING SUCH A DETECTION TERMINAL, AND METHOD FOR DETECTING AN OPTICALLY INVISIBLE NETWORK

(30) Priorité: 22.05.2013 FR 1354560
(43) Date de publication de la demande: 30.03.2016
(73) Titulaire: Société Plymouth Française, 69320 Feyzin (FR)
(72) Inventeur: ARNAUD, Daniel, 42100 Saint Etienne (FR); SAAD, Mounir, 67000 Strasbourg (FR)
(74) Mandataire: Germain Maureau
(86) Numéro de dépôt international: PCT/FR2014/051036
(87) Numéro de publication internationale: WO 2014/188100

(56) Documents cités:
- WO-A2-2011/147994
- DE-A1- 2 735 344
- DE-A1-102010 041 936
- FR-A1- 2 812 727
- US-A- 3 781 495
- US-A1- 2002 112 945
- US-A1- 2005 167 138
- US-A1- 2009 236 918
- US-B1- 7 287 990

## Description

La présente invention concerne une borne de détection d'un réseau optiquement invisible, tel qu'un réseau de gaz, d'électricité ou d'eau, une installation comprenant une telle borne de détection, et un procédé de détection d'un réseau optiquement invisible à l'aide d'une telle borne de détection.

Il importe, pour un gain de temps et de coûts mais aussi de sécurité, de pouvoir détecter la présence d'un réseau optiquement invisible, et de la localiser avec précision, sans creuser le sol, ni détruire des ouvrages, à l'occasion de travaux ultérieurs.

Plusieurs procédés peuvent être utilisés pour réaliser la détection de réseaux optiquement invisibles.

La détection par voie électromagnétique est la méthode la plus utilisée. Cette détection électromagnétique peut être effectuée à l'aide de détecteurs électromagnétiques reposant sur la détection active d'un signal électromagnétique.

Un procédé de détection active connu consiste à injecter, à l'aide d'un générateur de courant, un signal électrique dans un fil traceur électriquement conducteur associé au réseau à identifier et disposé suivant le tracé de ce dernier, et ce via des boîtiers de connexion installés à distances régulières le long du réseau pour servir de points d'accès, et à utiliser un détecteur électromagnétique agencé pour capter un champ électromagnétique créé par un courant alternatif circulant dans le fil traceur électriquement conducteur.

Le document EP 1 305 546 divulgue un boîtier de connexion comportant notamment des moyens d'introduction et de guidage d'une fiche d'un générateur de signal électrique, une première pièce conductrice destinée à être raccordée à la terre, et une deuxième pièce conductrice destinée à être reliée électriquement à un fil traceur électriquement conducteur associé au réseau à identifier, les première et deuxième pièces conductrices étant en appui l'une contre l'autre lorsqu'aucune action n'est exercée sur ces dernières, et les moyens d'introduction et de guidage étant conformés de telle sorte que, lorsque ladite fiche est engagée dans les moyens d'introduction et de guidage, ladite fiche est apte d'une part à prendre appui sur la deuxième pièce conductrice reliée au fil traceur dans lequel le signal électrique doit être injecté et d'autre part à séparer les première et deuxième pièces conductrices l'une de l'autre.

Lorsqu'un nombre important de réseaux optiquement invisibles distincts et équipés de boîtiers de connexion tels que décrits dans le document EP 1 305 546 sont situés à proximité les uns des autres, la détection d'un réseau optiquement invisible particulier peut s'avérer complexe.

En effet, une partie du signal électrique injecté dans le boîtier de connexion associé au réseau optiquement invisible à détecter, est susceptible de se propager, via la terre, dans des boîtiers de connexion associés à d'autres réseaux optiquement invisibles. Une telle propagation peut impliquer la création d'un champ électromagnétique le long des fils traceurs associés aux autres réseaux optiquement invisibles, un tel champ électromagnétique étant susceptible de perturber la détection et le suivi du réseau optiquement invisible à détecter.

Une solution pour pallier cet inconvénient peut consister à insérer des organes de séparation dans les moyens d'introduction et de guidage appartenant aux boîtiers de connexion associés aux autres réseaux afin de séparer les premières et deuxièmes pièces conductrices de ces boîtiers de connexion. Ces dispositions permettent d'isoler de la terre les fils traceurs associés aux réseaux situés à proximité du réseau à détecter, et donc d'éviter la création d'un champ électromagnétique le long de ces moyens de propagation susceptible de perturber la détection du réseau à détecter.

Toutefois, l'insertion des organes de séparation dans les boîtiers de connexion s'avère longue et fastidieuse, et ce d'autant plus lorsque les boîtiers de connexion sont disposés dans des galeries techniques ou des coffrets muraux.

De plus, une telle solution nécessite de disposer et de stocker un nombre importants d'organes de séparation.

En conséquence, la détection d'un réseau à l'aide d'un boîtier de connexion tel que décrit dans le document EP 1 305 546 peut s'avérer longue, malaisée et onéreuse.

Le document US7287990 divulgue une borne de détection selon le préambule de la revendication 1.

La présente invention vise à remédier à ces inconvénients.

Le problème technique à la base de l'invention consiste donc à fournir une borne de détection qui soit de structure simple et économique, et qui permette une détection aisée, rapide et fiable d'un réseau optiquement invisible, telle qu'un réseau de gaz, d'électricité, de fibres optiques ou d'eau (eau pluviale, eau usée, eau potable).

A cet effet, la présente invention concerne une borne de détection selon la revendication 1.

La structure de la borne de détection selon l'invention permet d'isoler aisément de la terre les moyens de propagation connectés aux moyens de connexion électrique appartenant à ladite borne de détection, et ce tout simplement en déplaçant l'élément de protection correspondant dans sa deuxième position.

Par conséquent, lorsqu'un nombre important de réseaux optiquement invisibles distincts et équipés de bornes de détection selon l'invention sont situés à proximité les uns des autres, la détection d'un réseau optiquement invisible particulier peut être réalisée aisément et fiablement uniquement en déplaçant, dans leur deuxième position, les éléments de protection appartenant aux bornes de détection associées aux autres réseaux. Ces dispositions permettent d'éviter la création d'un champ électromagnétique le long de ces moyens de propagation susceptible de perturber la détection du réseau à détecter.

Il en résulte une localisation aisée et rapide du réseau optiquement invisible à détecter en connectant une source de signal électrique au point de connexion et en utilisant un détecteur électromagnétique agencé pour capter le champ électromagnétique créé par le courant alternatif circulant dans les moyens de propagation.

De plus, la présence de l'élément de protection permet de protéger les moyens de connexion électrique, et de les rendre inaccessibles au public, ce qui évite tout risque d'endommagement de ces moyens de connexion électrique. Ces dispositions permettent ainsi d'assurer une fiabilité optimale de la détection du réseau optiquement invisible associé.

La structure de la borne de détection selon l'invention permet également de créer un point d'injection d'un signal électrique qui est situé à proximité immédiate des coffrets de compteurs gaz ou de compteurs électriques et des armoires électriques des réseaux de gaz et d'électricité, tout en étant à l'extérieur de ces dispositifs, ce qui permet d'améliorer la sécurité de la détection du réseau optiquement invisible.

Par support, on entend notamment un trottoir, une chaussée, un mur, une trappe d'accès à une galerie technique, un tampon, un regard ou encore un coffret mural.

Selon un mode de réalisation de l'invention, l'élément de protection est agencé pour être accessible au public lorsque l'élément de fixation est fixé dans ou sur le support.

Selon un mode de réalisation de l'invention, l'élément de protection est agencé pour être accessible depuis l'extérieur du support lorsque l'élément de fixation est fixé dans ou sur le support. Ainsi, la borne de détection selon l'invention ne nécessite pas l'intrusion dans un local ou un environnement fermé, et donc l'obtention d'une quelconque autorisation préalable du propriétaire du réseau à détecter. Il en résulte une localisation aisée et rapide du réseau optiquement invisible associé aux moyens de propagation.

Selon un mode de réalisation de l'invention, le point de connexion est agencé pour être accessible depuis l'extérieur du support lorsque l'élément de fixation est fixé dans ou sur le support et l'élément de protection est dans sa deuxième position.

Selon un mode de réalisation de l'invention, l'élément de protection est conformé de manière à empêcher l'accès au point de connexion lorsqu'il se trouve dans sa première position, et à libérer l'accès au point de connexion lorsqu'il se trouve dans sa deuxième position.

Avantageusement, dans sa première position, l'élément de protection recouvre au moins en partie l'élément de fixation, et de préférence au moins la portion centrale de l'élément de fixation.

Selon un mode de réalisation de l'invention, l'élément de protection est destiné à affleurer ou à faire saillie de la surface extérieure du support lorsque l'élément de fixation est fixé dans ou sur le support et l'élément de protection est dans sa première position.

Selon une caractéristique de l'invention, l'élément de protection est monté de manière imperdable sur l'élément de fixation.

Selon une caractéristique de l'invention, l'élément de protection est monté de manière amovible sur l'élément de fixation.

Selon une caractéristique de l'invention, la borne de détection comprend un boîtier de connexion dans lequel sont logés au moins en partie les moyens de connexion électrique.

Selon une caractéristique de l'invention, le point de connexion est disposé dans le boîtier de connexion.

Selon un mode de réalisation de l'invention, le boîtier de connexion est en matériau électriquement isolant.

Selon un mode de réalisation de l'invention, le boîtier de connexion est monté sur l'élément de fixation.

Avantageusement, l'élément de fixation comprend un logement dans lequel est logé au moins en partie le boîtier de connexion.

Selon un mode de réalisation de l'invention, l'élément de protection est conformé de manière à recouvrir, dans sa première position, au moins en partie le boîtier de connexion.

Selon une caractéristique de l'invention, le boîtier de connexion comprend des moyens d'introduction et de guidage d'une fiche d'un générateur de signal électrique, les moyens d'introduction et de guidage étant conformés de telle sorte que, lorsque ladite fiche est engagée dans les moyens d'introduction et de guidage, ladite fiche est apte à entrer en contact électrique avec le point de connexion.

Selon une caractéristique de l'invention, le boîtier de connexion comprend en outre un capot de fermeture mobile entre une position de fermeture dans laquelle le capot de fermeture empêche l'accès aux moyens d'introduction et de guidage, et une position de libération dans laquelle le capot de fermeture libère l'accès aux moyens d'introduction et de guidage.

Selon un mode de réalisation de l'invention, le capot de fermeture est monté pivotant entre ses positions de fermeture et de libération.

Selon un mode de réalisation de l'invention, l'élément de protection est conformé de manière à recouvrir, dans sa première position, au moins en partie le capot de fermeture.

Selon un mode de réalisation de l'invention, le boîtier de connexion comprend un corps de support délimitant un logement dans lequel sont logés au moins en partie les moyens de connexion électrique. Avantageusement, le capot de fermeture est monté pivotant sur le corps de support.

Selon une caractéristique de l'invention, les moyens d'introduction et de guidage sont ménagés sur le corps de support.

Selon une caractéristique de l'invention, les moyens de connexion électrique comportent un élément de connexion électriquement conducteur sur lequel est destiné à être connectés les moyens de propagation.

Selon une caractéristique de l'invention, l'élément de connexion comporte au moins une portion de contact apte à coopérer avec la portion électriquement conductrice de l'élément de protection lorsque l'élément de protection est dans sa première position.

Selon un mode de réalisation de l'invention, l'au moins une portion de contact fait saillie à l'extérieur du boîtier de connexion.

Selon une caractéristique de l'invention, le point de connexion est ménagé sur l'élément de connexion.

Avantageusement, les moyens de connexion électrique sont destinés à la connexion d'au moins un fil électriquement conducteur appartenant aux moyens de propagation.

Selon un mode de réalisation de l'invention, l'élément de connexion comprend une partie de connexion sur laquelle est destiné à être connecté au moins un fil électriquement conducteur appartenant aux moyens de propagation.

Selon un mode de réalisation de l'invention, la partie de connexion comporte au moins un orifice de connexion destiné au passage de l'âme métallique de l'au moins un fil électriquement conducteur.

Selon un mode de réalisation de l'invention, les moyens de connexion électrique comportent au moins un fil électriquement conducteur s'étendant le long du réseau optiquement invisible et étant agencé pour propager, en conditions d'utilisation de la borne de détection, un signal électromagnétique le long du réseau optiquement invisible. L'au moins un fil électriquement conducteur forme ainsi un fil traceur électriquement conducteur. Par exemple, l'au moins un fil électriquement conducteur peut être disposé à l'extérieur ou à l'intérieur du réseau optiquement invisible.

Selon une caractéristique de l'invention, l'élément de protection est électriquement conducteur et forme la portion électriquement conductrice.

Selon un mode de réalisation de l'invention, l'élément de fixation comporte au moins une ouverture de passage débouchant dans le logement recevant le boîtier de connexion, l'ouverture de passage étant destinée au passage d'au moins un fil électriquement conducteur appartenant aux moyens de propagation.

Selon un mode de réalisation de l'invention, le boîtier de connexion comprend des moyens d'immobilisation agencés pour immobiliser les moyens de connexion électrique.

Selon un mode de réalisation de l'invention, l'élément de fixation comporte un logement de réception agencé pour loger au moins en partie l'élément de protection lorsque l'élément de protection est dans sa première position.

Selon un mode de réalisation de l'invention, l'au moins une portion de contact s'étend dans le logement de réception.

Selon un mode de réalisation de l'invention, le logement de réception présente une forme sensiblement complémentaire de celle de l'élément de protection.

Selon un mode de réalisation de l'invention, les moyens de mise à la terre comportent un piquet de terre destiné à être enterré, et au moins un fil de terre relié électriquement au piquet de terre, le fil de terre étant agencé pour être relié électriquement à la portion électriquement conductrice lorsque l'élément de protection est dans première position.

Selon un mode de réalisation de l'invention, les moyens de mise à la terre comportent en outre un organe de connexion électriquement conducteur relié électriquement au fil de terre et agencé pour être relié électriquement à la portion électriquement conductrice lorsque l'élément de protection est dans première position. L'organe de connexion est par exemple logé au moins en partie dans l'élément de fixation. Selon une caractéristique de l'invention, l'organe de connexion comporte au moins une portion de contact apte à coopérer avec la portion électriquement conductrice de l'élément de protection lorsque l'élément de protection est dans sa première position.

Selon un autre mode de réalisation de l'invention, les moyens de mise à la terre comportent en outre un fil de connexion relié électriquement au fil de terre et à la portion électriquement conductrice.

Selon un mode de réalisation de l'invention, l'élément de protection comporte un corps de protection sur lequel est montée la portion électriquement conductrice.

Selon un aspect de l'invention, le corps de protection est en matériau électriquement isolant, par exemple en matière plastique ou composite.

Selon un mode de réalisation de l'invention, l'élément de fixation est en matériau électriquement isolant, par exemple en matière plastique ou composite.

Selon un mode de réalisation de l'invention, l'élément de fixation est agencé pour être fixé dans une chaussée, un trottoir ou encore sur une façade murale, à proximité du réseau à détecter.

La présente invention concerne également une installation comprenant une borne de détection selon l'invention, et des moyens de propagation connectés aux moyens de connexion électrique appartenant à la borne de détection, les moyens de propagation étant conformés pour propager, lorsqu'un générateur de signal électrique est connecté aux moyens de connexion électrique, un signal électrique le long du réseau optiquement invisible.

La présente invention concerne en outre un procédé de détection d'un réseau optiquement invisible, comprenant les étapes consistant à :
- prévoir une borne de détection selon l'invention,
- prévoir des moyens de propagation agencés pour propager un signal électrique le long du réseau optiquement invisible,
- relier électriquement les moyens de propagation aux moyens de connexion électrique appartenant à la borne de détection,
- fixer l'élément de fixation appartenant à la borne de détection dans ou sur un support,
- déplacer l'élément de protection appartenant à la borne de détection dans sa deuxième position,
- injecter un signal électrique dans les moyens de connexion électrique appartenant à la borne de détection, et
- détecter le champ électromagnétique généré par les moyens de propagation.

De toute façon l'invention sera bien comprise à l'aide de la description qui suit en référence au dessin schématique annexé représentant, à titre d'exemple non limitatif, plusieurs formes d'exécution de cette borne de détection.
Figures 1 et 2 sont des vues en perspective de dessus d'une borne de détection selon un premier mode de réalisation de l'invention dans deux positions différentes de fonctionnement.
Figure 3 est une vue en coupe de la borne de détection de la figure 1.
Figures 4 et 5 sont des vues en perspective de dessus d'un boîtier de connexion appartenant à la borne de détection de la figure 1.
Figure 6 est une vue éclatée, en perspective, du boîtier de connexion de la figure 4.
Figure 7 est une vue en coupe, en perspective, du boîtier de connexion de la figure 4 sur lequel est engagée la fiche d'un générateur de signal électrique.
Figure 8 est une vue en perspective de dessus d'une borne de détection selon un deuxième mode de réalisation de l'invention.
Figures 9 et 10 sont des vues schématiques d'une borne de détection selon un troisième mode de réalisation de l'invention dans deux positions différentes de fonctionnement.
Figures 11 et 12 sont des vues schématiques d'une borne de détection selon un quatrième mode de réalisation de l'invention dans deux positions différentes de fonctionnement.

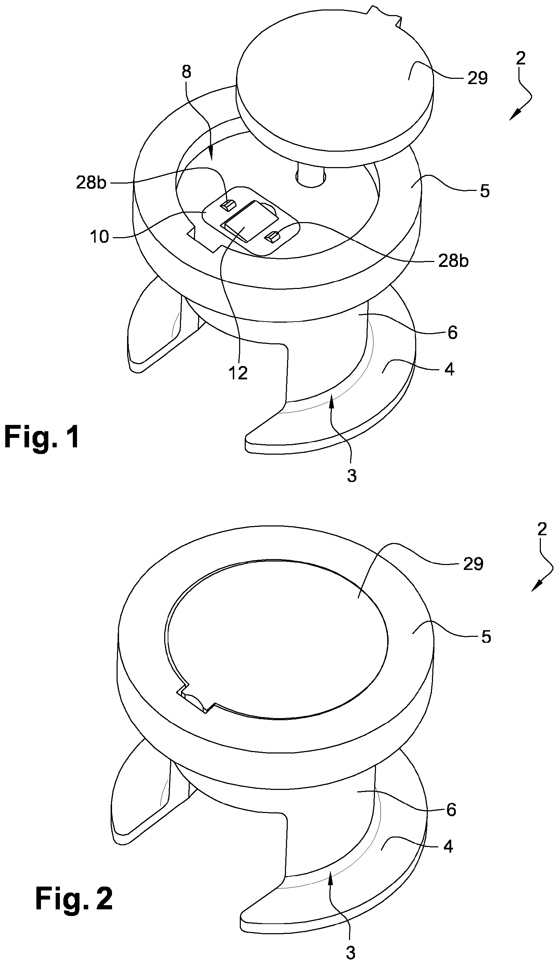

Les figures 1 à 7 représentent une borne de détection 2 d'un réseau optiquement invisible, tel qu'un réseau de gaz, d'électricité, de fibres optiques ou d'eau.

La borne de détection 2 comprend un élément de fixation 3 monobloc destiné à être fixé dans ou sur un support, et plus particulièrement dans une chaussée ou un trottoir. Selon le monde de réalisation représenté sur les figures 1 à 7, l'élément de fixation 3 est électriquement conducteur et est destiné à être relié à la terre. Selon ce mode de réalisation, l'élément de fixation 3 est de préférence métallique, et peut par exemple être réalisé en fonte.

Selon le mode de réalisation représenté sur les figures 1 à 7, l'élément de fixation 3 comporte une embase 4, une partie de support 5 destinée à affleurer ou à faire saillie de la surface extérieure du support, et une partie de liaison 6 reliant l'embase 4 à la partie de support 5 et délimitant un logement interne 7. Selon le mode de réalisation représenté sur les figures 1 à 7, la partie de support 5 présente une forme circulaire. Cependant, la partie de support 5 pourrait présenter une toute autre forme, par exemple carrée, rectangulaire ou encore hexagonale.

La partie de support 5 délimite un logement de réception 8 et une ouverture traversante 9 débouchant d'une part dans le logement interne 7 et d'autre part dans le logement de réception 8.

La borne de détection 2 comprend en outre un boîtier de connexion 10 monté sur l'élément de fixation 3. Selon le mode de réalisation représenté sur les figures 1 à 7, le boîtier de connexion 10 s'étend à travers l'ouverture traversante 9 ménagée sur la partie de support 5, et est logé au moins en partie dans le logement interne 7 délimité par la partie de liaison 6. Le boîtier de connexion 10 est par exemple monté sur l'élément de fixation 3 de manière à affleurer le fond du logement de réception 8.

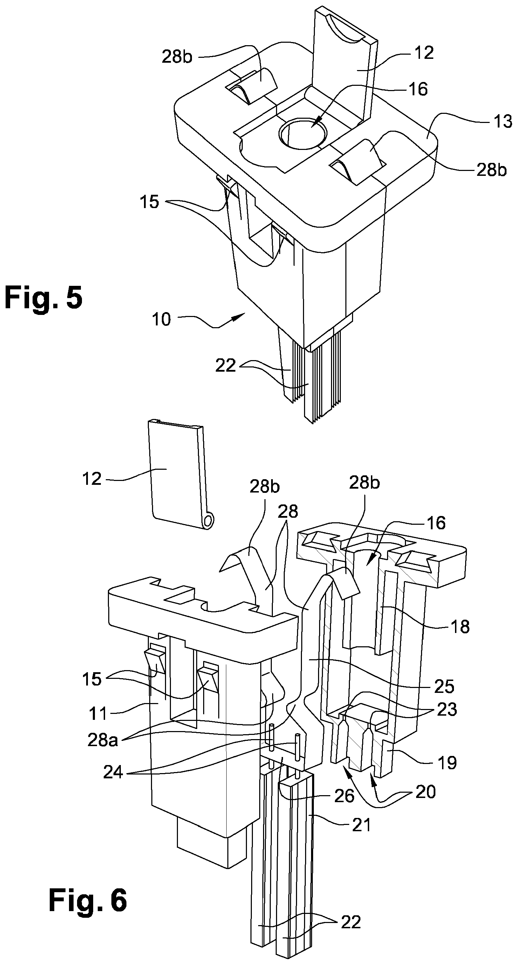

Le boîtier de connexion 10 est réalisé en un matériau électriquement isolant, et par exemple en matière plastique. Comme montré plus particulièrement sur la figure 6, le boîtier de connexion 10 comporte un corps de support 11 et un capot de fermeture 12 monté pivotant sur le corps de support 11.

Le corps de support 11 comprend une portion de retenue 13 destinée à prendre appui sur un épaulement 14 ménagé sur la partie de support 5 et entourant l'ouverture traversante 9, et des languettes de fixation 15 agencées pour coopérer avec la partie de support 5 de manière à immobiliser le corps de support 11 sur l'élément de fixation 3.

Le corps de support 11 comporte de plus un orifice d'introduction 16 débouchant dans le logement de réception 8 et conformé de manière à permettre l'introduction d'une fiche 17 d'un générateur de signal électrique dans le boîtier de connexion 10, et une portion de guidage 18 tubulaire dans laquelle débouche l'orifice d'introduction 16, la portion de guidage 18 étant agencée pour guider la fiche 17 d'un générateur de signal électrique lors de l'introduction de ladite fiche dans le boîtier de connexion 10.

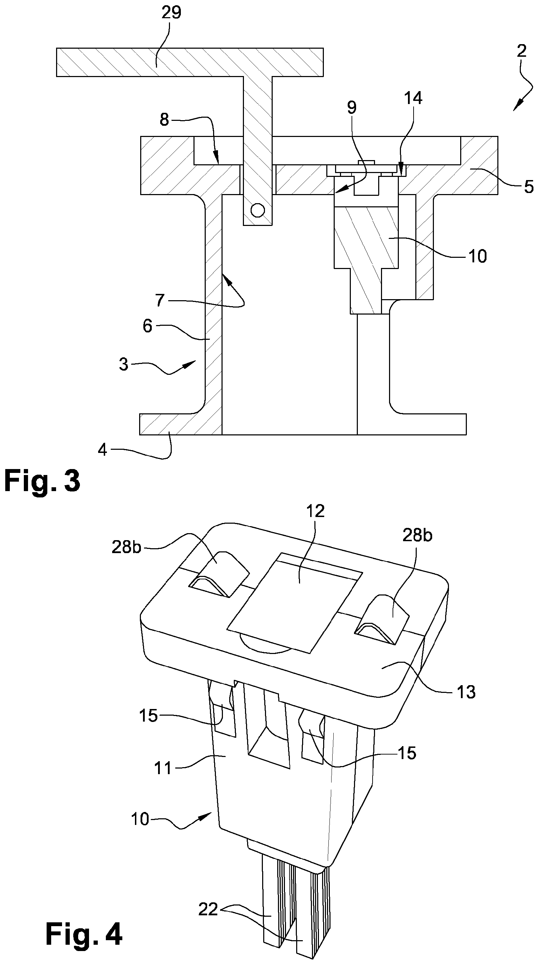

Le capot de fermeture 12 est plus particulièrement monté pivotant sur le corps de support 11 entre une position de fermeture (voir la figure 4) dans laquelle le capot de fermeture 12 obture l'orifice d'introduction 16 et empêche l'accès à ce dernier, et une position de libération (voir la figure 5) dans laquelle le capot de fermeture 12 libère l'accès à l'orifice d'introduction 16 et autorise l'introduction de la fiche 17 d'un générateur de signal électrique dans le boîtier de connexion 10. Le capot de fermeture 12 est avantageusement agencé pour affleuré la surface supérieure de la portion de retenue 13 et le fond du logement de réception 8 lorsqu'il se trouve dans sa position de fermeture.

Comme montré sur la figure 6, le corps de support 11 comporte également une portion de montage 19 délimitant deux logements 20 destiné à recevoir chacun une portion d'extrémité de la gaine 21 d'un fil électriquement conducteur 22, et comportant deux orifices de passage 23 débouchant chacun dans l'un des logements 20 et adaptés chacun pour le passage de l'âme 24 du fil électriquement conducteur 22 correspondant. Chaque logement 20 présente avantageusement une forme complémentaire de la gaine 21 du fil électriquement conducteur 22 correspondant. Par exemple, la gaine 21 de chaque fil électriquement conducteur 22 et chaque logement 20 peuvent présenter une section rectangulaire. Avantageusement, chaque orifice de passage 23 comporte une portion d'introduction évasée de manière à faciliter l'introduction dans celui-ci de l'âme 24 du fil électriquement conducteur 22 correspondant.

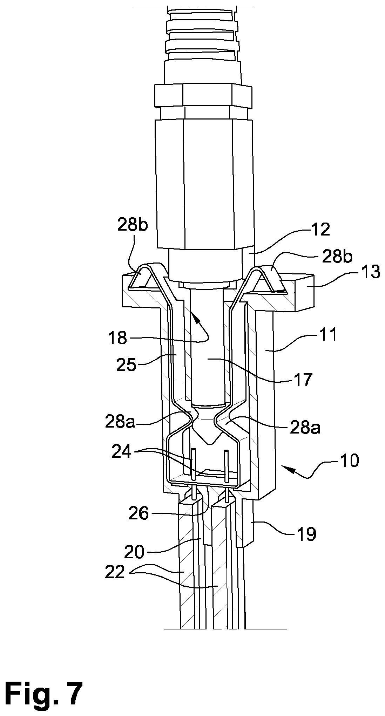

Comme montré plus particulièrement sur les figures 6 et 7, la borne de détection 2 comporte en outre un élément de connexion 25 électriquement conducteur logé en partie dans le boîtier de connexion 10. Selon le mode de réalisation représenté sur les figures 1 à 7, l'élément de connexion 25 présente une forme générale de U, et est conformé pour la connexion de deux fils électriquement conducteurs 22. L'élément de connexion 25 est avantageusement monobloc, et est par exemple réalisé par emboutissage et/ou pliage. L'élément de connexion 25 est de préférence réalisé dans le même matériau que l'âme 24 de chaque fil électriquement conducteur 22, et par exemple en acier inoxydable.

L'élément de connexion 25 comporte une partie de connexion 26 disposée dans le corps de support 11 et prenant appui contre une surface de support prévue sur ce dernier, la partie de connexion 26 étant pourvue de deux orifices de connexion situés chacun en regard d'un orifice de passage 23 et destinés chacun au passage de l'âme 24 du fil électriquement conducteur 22 correspondant. L'élément de connexion 25 comporte également deux branches de connexion 28 présentant chacune une portion de connexion 28a situées dans le prolongement de la portion de guidage 18 et destinée à entrer en contact électrique avec la fiche 17 d'un générateur de signal électrique lorsque ladite fiche est introduite dans la portion de guidage 18, et une portion de contact 28b faisant saillie du boîtier de connexion 10 et s'étendant dans le logement de réception 8.

La borne de détection 2 comporte enfin un élément de protection 29 se présentant plus particulièrement sous la forme d'un couvercle de protection.

Selon le mode de réalisation représenté sur les figures 1 à 7, l'élément de protection 29 est électriquement conducteur, et est relié électriquement à l'élément de fixation 3. L'élément de protection 29 est ainsi destiné à être relié à la terre via l'élément de fixation 3. L'élément de protection 29 est monté mobile sur l'élément de fixation 3 entre une première position (voir la figure 2) dans laquelle l'élément de protection 29 est logé dans le logement de réception 8 et est en contact électrique avec les deuxièmes portions de contact 28b appartenant à l'élément de connexion 25, et une deuxième position (voir la figure 1) dans laquelle l'élément de protection 29 est disposé à l'extérieur du logement de réception 8 et est donc isolé électriquement de l'élément de connexion 25. L'élément de protection 29 est avantageusement agencé de manière à recouvrir le boîtier de connexion 10 et à empêcher l'accès à ce dernier lorsqu'il se trouve dans sa première position.

L'élément de protection 29 est en outre apte à maintenir une continuité électrique entre l'élément de fixation 3 et l'élément de connexion 25, et donc entre l'élément de fixation 3 et les fils électriquement conducteurs 22 connectés à l'élément de connexion 25, lorsqu'il se trouve dans sa première position. Ces dispositions permettent de mettre à la terre les fils électriquement conducteurs 22 connectés à l'élément de connexion 25 lorsque l'élément de protection 29 est dans sa première position, et d'isoler de la terre ces fils électriquement conducteurs 22 lorsque l'élément de protection 29 est dans sa deuxième position.

L'élément de protection 29 présente une surface extérieure opposée à la partie de support 5. La surface extérieure peut avantageusement comporter des moyens d'identification du réseau à détecter. Ces moyens d'identifications peuvent par exemple comporter des inscriptions gravées ou imprimées directement sur la surface extérieure l'élément de protection 29, ou rapportées sur celui-ci, par exemple par collage ou fixation d'un élément d'identification pourvu de ces inscriptions.

Un procédé de détection d'un réseau optiquement invisible, tel qu'un réseau de gaz, d'électricité, de fibres optiques ou d'eau, à l'aide d'une borne de détection 2 selon l'invention va maintenant être décrit.

Ce procédé comprend les étapes consistant à :
- prévoir une borne de détection 2 selon l'invention,
- prévoir au moins un fil électriquement conducteur 22 s'étendant le long du réseau optiquement invisible,
- dénuder l'une des extrémités du fil électriquement conducteur 22,
- connecter l'extrémité dénudée du fil électriquement conducteur 22 sur l'élément de connexion 25 de la borne de détection 2,
- fixer l'élément de fixation 3 de la borne de détection 2 dans ou sur un support, tel qu'un trottoir, à proximité du réseau à détecter,
- déplacer l'élément de protection 29 dans sa deuxième position,
- déplacer le capot de fermeture 12 dans sa position de libération,
- introduire la fiche 17 d'un générateur de signal électrique, tel qu'un générateur de courant, dans l'orifice d'introduction 16 jusqu'à ce que la fiche entre en contact avec les portions de connexion 28a,
- injecter un signal électrique dans les moyens de connexion électrique appartenant à la borne de détection, et
- injecter un signal électrique dans l'élément de connexion 25 à l'aide du générateur de courant, et
- détecter le champ électromagnétique généré par le fil électriquement conducteur 22 à l'aide d'un détecteur électromagnétique de manière à détecter et suivre le réseau optiquement invisible.

L'étape de fixation consiste par exemple à fixer l'élément de fixation 3 de la borne de détection 2 à proximité d'un coffret de compteurs gaz lorsque le réseau à détecter est un réseau de gaz, et à proximité d'un coffret de compteurs électriques, d'une armoire électrique ou d'un transformateur électrique lorsque le réseau à détecter est un réseau électrique.

Si d'autres réseaux optiquement invisibles équipés de bornes de détection 2 selon l'invention sont situés à proximité du réseau optiquement invisible à détecter, le procédé de détection peut comprendre une étape supplémentaire consistant à déplacer les organes de protection 29 des bornes de détection 2 appartenant à ces autres réseaux optiquement invisibles dans leur deuxième position, et ce de manière à isoler de la terre les fils électriquement conducteurs raccordés aux éléments de fixation 3 appartenant à ces bornes de détection 2 afin d'éviter la propagation d'un signal électrique résiduel le long de ces fils électriquement conducteurs susceptible de perturber la détection et le suivi du réseau optiquement invisible.

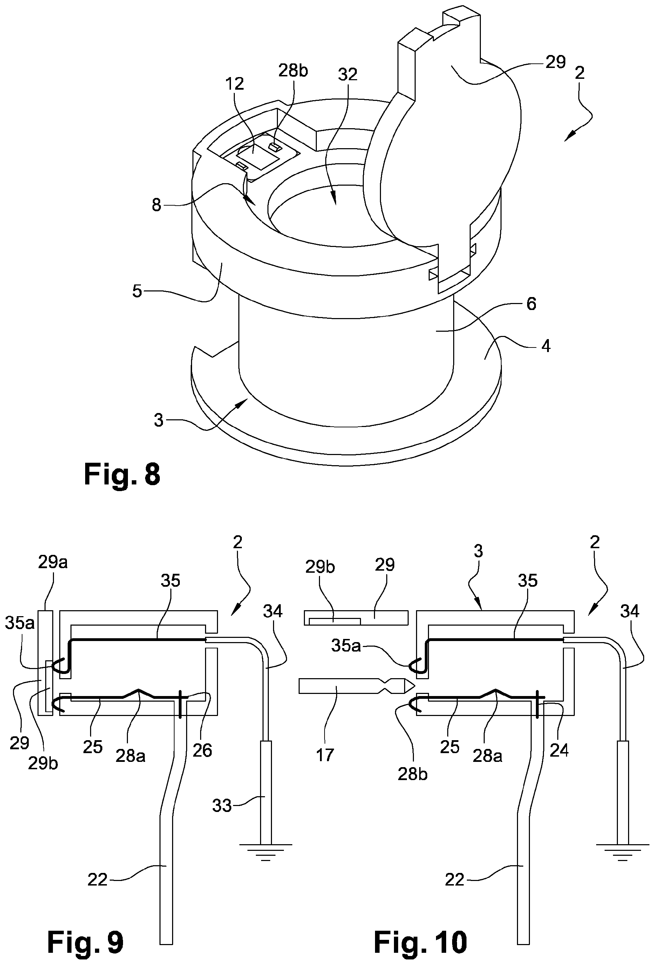

La figure 8 représente une borne de détection 2 selon un deuxième mode de réalisation de l'invention qui diffère de celui représenté sur les figures 1 à 7 essentiellement en ce que le boîtier de connexion 10 est logé à l'extérieur de la portion de liaison 6, et en ce que la borne de détection 2 forme une bouche à clé destinée à être située au niveau du sol de manière à permettre l'accès, à l'aide d'une clé appropriée, à l'organe de manœuvre d'une vanne d'une canalisation enterrée, telle qu'une canalisation de distribution d'eau. Ainsi, la partie de support 5 comporte en outre une ouverture de passage 32 débouchant dans la partie de liaison 6, et la portion de liaison 6 est conformée pour permettre le passage d'une clé d'actionnement de l'organe de manœuvre de la vanne correspondant. Selon ce mode de réalisation de l'invention, l'élément de protection 29 est monté pivotant sur l'élément de fixation 3 autour d'un axe de pivotement transversal, et de préférence sensiblement perpendiculaire, à l'axe longitudinal de la borne de détection 2.

Les figures 9 et 10 représentent une borne de détection 2 selon un troisième mode de réalisation de l'invention qui diffère de celui représenté sur les figures 1 à 7 essentiellement en ce que l'élément de fixation 3 est en matériau électriquement isolant, par exemple en matière plastique ou composite, en ce que l'élément de protection 29 comporte un corps de protection 29a en matériau électriquement isolant, par exemple en matière plastique ou composite, et une portion électriquement conductrice 29b montée sur le corps de protection 29a, et en ce que la borne de détection 2 comporte en outre des moyens de mise à la terre.

Les moyens de mise à la terre comportent avantageusement un piquet de terre 33 destiné à être enterré, un fil de terre 34, tel q'un fil de terre tressé, relié électriquement au piquet de terre 33, et un organe de connexion 35 électriquement conducteur et logé au moins en partie dans l'élément de fixation 3, l'organe de connexion 35 étant relié électriquement au fil de terre 34 et étant agencé pour être relié électriquement à la portion électriquement conductrice 29b lorsque l'élément de protection 29 est dans première position (voir la figure 9). L'organe de connexion 35 comporte plus particulièrement une portion de contact 35a apte à coopérer avec la portion électriquement conductrice 29b de l'élément de protection 29 lorsque ce dernier est dans sa première position.

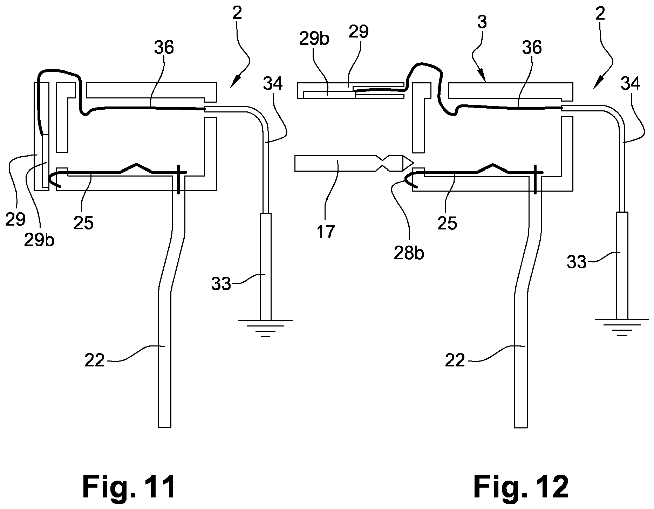

Les figures 11 et 12 représentent une borne de détection 2 selon un quatrième mode de réalisation de l'invention qui diffère de celui représenté sur les figures 9 et 10 essentiellement en ce que les moyens de mise à la terre comportent, à la place de l'organe de connexion 35, un fil de connexion 36 relié électriquement au fil de terre 34 et à la portion électriquement conductrice 29b.

Comme il va de soi, l'invention ne se limite pas aux seules formes d'exécution de cette borne de détection, décrites ci-dessus à titre d'exemples, elle en embrasse au contraire toutes les variantes de réalisation, telles que déterminées par les revendications annexées.

## Revendications

1. Borne de détection (2) d'un réseau optiquement invisible, comportant :
- un élément de fixation (3) destiné à être fixé dans ou sur un support,
- des moyens de connexion électrique destinés à la connexion de moyens de propagation agencés pour propager un signal électrique le long du réseau optiquement invisible, les moyens de connexion électrique comportant un point de connexion (28a) destiné à la connexion électrique d'une source de signal électrique, tel qu'un générateur de signal électrique,
- des moyens de mise à la terre destinés à être reliés à la terre, et
- un élément de protection (29) comprenant au moins une portion électriquement conductrice, l'élément de protection (29) étant monté mobile sur l'élément de fixation (3) entre une première position dans laquelle l'élément de protection recouvre au moins en partie les moyens de connexion électrique et les moyens de connexion électrique sont en contact électrique avec la portion électriquement conductrice et sont reliés électriquement aux moyens de mise à la terre via la portion électriquement conductrice, et une deuxième position dans laquelle les moyens de connexion électrique sont isolés électriquement de la portion électriquement conductrice et des moyens de mise à la terre,
**caractérisé en ce que** l'élément de fixation (3) est électriquement conducteur et forme au moins en partie les moyens de mise à la terre, et **en ce que** la portion électriquement conductrice de l'élément de protection (29) est reliée à l'élément de fixation (3) de manière à maintenir une continuité électrique entre l'élément de fixation (3) et les moyens de connexion électrique lorsque l'élément de protection (29) est dans sa première position.

2. Borne de détection selon la revendication 1, dans laquelle l'élément de protection (29) est monté de manière imperdable sur l'élément de fixation (3).

3. Borne de détection selon la revendication 1 ou 2, laquelle comprend un boîtier de connexion (10) dans lequel sont logés au moins en partie les moyens de connexion électrique.

4. Borne de détection selon la revendication 3, dans laquelle le boîtier de connexion (10) est monté sur l'élément de fixation (3).

5. Borne de détection selon la revendication 3 ou 4, dans laquelle l'élément de fixation (3) comprend un logement (7) dans lequel est logé au moins en partie le boîtier de connexion (10).

6. Borne de détection selonl'une des revendications 3 à 5, dans laquelle l'élément de protection (29) est conformé de manière à recouvrir, dans sa première position, au moins en partie le boîtier de connexion (10).

7. Borne de détection selon l'une des revendications 3 à 6, dans laquelle le boîtier de connexion (10) comporte des moyens d'introduction et de guidage d'une fiche (17) d'un générateur de signal électrique, les moyens d'introduction et de guidage étant conformés de telle sorte que, lorsque ladite fiche est engagée dans les moyens d'introduction et de guidage, ladite fiche est apte à entrer en contact électrique avec le point de connexion.

8. Borne de détection selon la revendication 7, dans laquelle le boîtier de connexion (10) comporte en outre un capot de fermeture (12) mobile entre une position de fermeture dans laquelle le capot de fermeture (12) empêche l'accès aux moyens d'introduction et de guidage, et une position de libération dans laquelle le capot de fermeture (12) libère l'accès aux moyens d'introduction et de guidage.

9. Borne de détection selon la revendication 8, dans laquelle l'élément de protection (29) est conformé de manière à recouvrir, dans sa première position, au moins en partie le capot de fermeture (12).

10. Borne de détection selon l'une des revendications 1 à 9, dans laquelle les moyens de connexion électrique comportent un élément de connexion (25) électriquement conducteur sur lequel est destiné à être connectés les moyens de propagation.

11. Borne de détection selon la revendication 10, dans laquelle l'élément de connexion (25) comporte au moins une portion de contact (28b) apte à coopérer avec la portion électriquement conductrice de l'élément de protection (29) lorsque l'élément de protection (29) est dans sa première position.

12. Borne de détection selon l'une des revendications 1 à 11, dans laquelle l'élément de fixation (3) comporte un logement de réception (8) agencé pour loger au moins en partie l'élément de protection (29) lorsque l'élément de protection (29) est dans sa première position.

13. Borne de détection selon l'une des revendications 1 à 12, dans laquelle l'élément de protection est électriquement conducteur et forme la portion électriquement conductrice.

14. Installation comprenant une borne de détection (2) selon l'une des revendications 1 à 13, et des moyens de propagation connectés aux moyens de connexion électrique appartenant à la borne de détection, les moyens de propagation étant conformés pour propager, lorsqu'un générateur de signal électrique est connecté aux moyens de connexion électrique, un signal électrique le long du réseau optiquement invisible.

15. Procédé de détection d'un réseau optiquement invisible, comprenant les étapes consistant à :
- prévoir une borne de détection (2) selon l'une des revendications 1 à 13,
- prévoir des moyens de propagation agencés pour propager un signal électrique le long du réseau optiquement invisible,
- relier électriquement les moyens de propagation aux moyens de connexion électrique appartenant à la borne de détection (2),
- fixer l'élément de fixation (3) appartenant à la borne de détection (2) dans ou sur un support,
- déplacer l'élément de protection (29) appartenant à la borne de détection (2) dans sa deuxième position,
- injecter un signal électrique dans les moyens de connexion électrique appartenant à la borne de détection (2), et
- détecter le champ électromagnétique généré par les moyens de propagation.

## Patentansprüche

1. Endgerät zur Detektion (2) eines optisch unsichtbaren Netzwerks, aufweisend:
- ein Befestigungselement (3), das zur Befestigung in oder auf einem Halter bestimmt ist,
- elektrische Verbindungsmittel, die zur Verbindung von Weiterverbreitungsmitteln bestimmt sind, die zur Weiterverbreitung eines elektrischen Signals entlang des optisch unsichtbaren Netzwerks eingerichtet sind, wobei die elektrischen Verbindungsmittel einen Verbindungspunkt (28a) aufweisen, der zur elektrischen Verbindung einer elektrischen Signalquelle wie ein elektrischer Signalerzeuger bestimmt ist,
- Erdungsmittel, die zur Verbindung mit der Erde bestimmt sind, und
- ein Schutzelement (29), das mindestens einen elektrisch leitenden Abschnitt umfasst, wobei das Schutzelement (29) auf dem Befestigungselement (3) zwischen einer ersten Position, in welcher das Schutzelement die elektrischen Verbindungsmittel mindestens teilweise verdeckt und der elektrisch leitende Abschnitt im elektrischen Kontakt mit den elektrischen Verbindungsmitteln ist und mit den Erdungsmitteln elektrisch verbunden ist, und einer zweiten Position, in welcher der elektrisch leitende Abschnitt von den elektrischen Verbindungsmitteln elektrisch isoliert ist, beweglich angebracht ist,
**dadurch gekennzeichnet, dass** das Befestigungselement (3) elektrisch leitend ist und mindestens teilweise die Erdungsmittel bildet, und dass der elektrisch leitende Abschnitt des Schutzelements (29) mit dem Befestigungselement (3) derart verbunden ist, dass eine elektrische Kontinuität zwischen dem Befestigungselement (3) und den elektrischen Verbindungsmitteln aufrechterhalten wird, wenn das Schutzelement (29) in seiner ersten Position ist.

2. Endgerät zur Detektion nach Anspruch 1, wobei das Schutzelement (29) auf dem Befestigungselement (3) unverlierbar angebracht ist.

3. Endgerät zur Detektion nach Anspruch 1 oder 2, das einen Verbindungskasten (10) umfasst, in dem die elektrischen Verbindungsmittel mindestens teilweise untergebracht sind.

4. Endgerät zur Detektion nach Anspruch 3, wobei der Verbindungskasten (10) auf dem Befestigungselement (3) angebracht ist.

5. Endgerät zur Detektion nach Anspruch 3 oder 4, wobei das Befestigungselement (3) eine Aufnahme (7) umfasst, in dem der Verbindungskasten (10) mindestens teilweise untergebracht ist.

6. Endgerät zur Detektion nach einem der Ansprüche 3 bis 5, wobei das Schutzelement (29) derart ausgebildet ist, dass es in seiner ersten Position den Verbindungskasten (10) mindestens teilweise verdeckt.

7. Endgerät zur Detektion nach einem der Ansprüche 3 bis 6, wobei der Verbindungskasten (10) Einführ- und Führungsmittel eines Steckers (17) eines elektrischen Signalerzeugers aufweist, wobei die Einführ- und Führungsmittel derart ausgebildet sind, dass, wenn der Stecker in die Einführ- und Führungsmittel eingesetzt ist, der Stecker imstande ist, mit dem Verbindungspunkt in elektrischen Kontakt zu treten.

8. Endgerät zur Detektion nach Anspruch 7, wobei der Verbindungskasten (10) ferner eine Verschlusskappe (12) aufweist, die zwischen einer Verschlussposition, in der die Verschlusskappe (12) den Zugriff auf die Einführ- und Führungsmittel verhindert, und einer Freigabeposition, in der die Verschlusskappe (12) den Zugriff auf die Einführ- und Führungsmittel freigibt, beweglich ist.

9. Endgerät zur Detektion nach Anspruch 8, wobei das Schutzelement (29) derart ausgebildet ist, dass es in seiner ersten Position die Verschlusskappe (12) mindestens teilweise verdeckt.

10. Endgerät zur Detektion nach einem der Ansprüche 1 bis 9, wobei die elektrischen Verbindungsmittel ein elektrisch leitendes Verbindungselement (25) aufweisen, auf dem die Weiterverbreitungsmittel bestimmt sind, verbunden zu sein.

11. Endgerät zur Detektion nach Anspruch 10, wobei das Verbindungselement (25) mindestens einen Kontaktabschnitt (28b) aufweist, der imstande ist, mit dem elektrisch leitenden Abschnitt des Schutzelements (29) zusammenzuwirken, wenn das Schutzelement (29) in seiner ersten Position ist.

12. Endgerät zur Detektion nach einem der Ansprüche 1 bis 11, wobei das Befestigungselement (3) eine Empfangsaufnahme (8) aufweist, die eingerichtet ist, um das Schutzelement (29) mindestens teilweise aufzunehmen, wenn das Schutzelement (29) in seiner ersten Position ist.

13. Endgerät zur Detektion nach einem der Ansprüche 1 bis 12, wobei das Schutzelement elektrisch leitend ist und den elektrisch leitenden Abschnitt bildet.

14. Installation, umfassend ein Endgerät zur Detektion (2) nach einem der Ansprüche 1 bis 13, und Weiterverbreitungsmittel, die mit den elektrischen Verbindungsmitteln verbunden sind, die zum Endgerät zur Detektion gehören, wobei die Weiterverbreitungsmittel ausgebildet sind, um, wenn ein elektrischer Signalerzeuger mit den elektrischen Verbindungsmitteln verbunden ist, ein elektrisches Signal entlang des optisch unsichtbaren Netzwerks weiterzuverbreiten.

15. Verfahren zur Detektion eines optisch unsichtbaren Netzwerks, umfassend die folgenden Schritte:
- Bereitstellen eines Endgeräts zur Detektion (2) nach einem der Ansprüche 1 bis 13,
- Bereitstellen von Weiterverbreitungsmitteln, die eingerichtet sind, um ein elektrisches Signal entlang des optisch unsichtbaren Netzwerks weiterzuverbreiten,
- elektrisches Verbinden der Weiterverbreitungsmittel mit den elektrischen Verbindungsmitteln, die zum Endgerät zur Detektion (2) gehören,
- Befestigen des Befestigungselements (3), das zum Endgerät zur Detektion (2) gehört, in oder auf einem Halter,
- Verlagern des Schutzelements (29), das zum Endgerät zur Detektion (2) gehört, in seine zweite Position,
- Einspeisen eines elektrischen Signals in die elektrischen Verbindungsmittel, die zum Endgerät zur Detektion (2) gehören, und
- Ermitteln des von den Weiterverbreitungsmitteln erzeugten elektromagnetischen Feldes.

## Claims

1. A detecting terminal (2) for detecting an optically invisible network, including:
- a fastening element (3) intended to be fastened in or on a support,
- electrical connection means for the connection of propagation means arranged to propagate an electrical signal along the optically invisible network, the electrical connection means including a connection point (28a) for the electrical connection of an electrical signal source, such as an electrical signal generator,
- grounding means intended to be grounded, and
- a protection element (29) comprising at least one electrically conductive portion, the protection element (29) being movably mounted on the fastening element (3) between a first position wherein the protection element covers at least partially the electrical connection means and the electrical connection means are in electrical contact with the electrically conductive portion and are electrically connected to the grounding means via the electrically conductive portion, and a second position wherein the electrical connection means are electrically insulated from the electrically conductive portion and the electrical connection means,
**characterized in that** the fastening element (3) is electrically conductive and forms at least partially the grounding means, and **in that** the electrically conductive portion of the protection element (29) is connected to the fastening element (3) so as to maintain an electrical continuity between the fastening element (3) and the electrical connection means when the protection element (29) is in its first position.

2. The detection terminal according to claim 1, wherein the protection element (29) is captively mounted on the fastening element (3).

3. The detection terminal according to claim 1 or 2, comprising a connection casing (10) in which are housed at least partially the electrical connection means.

4. The detection terminal according to claim 3, wherein said connection casing (10) is mounted on the fastening element (3).

5. The detection terminal according to claim 3 or 4, wherein the fastening element (3) comprises a housing (7) in which is housed at least partially the connection casing (10).

6. The detection terminal according to any of claims 3 to 5, wherein the protection element (29) is shaped so as to cover, in its first position, at least partially the connection casing (10).

7. The detection terminal according to any of claims 3 to 6, wherein the connection casing (10) includes introduction and guide means for introducing and guiding a plug (17) of an electrical signal generator, the introduction and guide means being shaped such that, when said plug is engaged in the introduction and guide means, said plug is able to come into electrical contact with the connection point.

8. The detection terminal according to claim 7, wherein the connection casing (10) further includes a closing cap (12) movable between a closed position wherein the closing cap (12) prevents access to the introduction and guide means, and a released position wherein the closing cap (12) releases access to the introduction and guide means.

9. The detection terminal according to claim 8, wherein the protection element (29) is shaped so as to cover, in its first position, at least partially the closing cap (12).

10. The detection terminal according to any of claims 1 to 9, wherein the electrical connection means include an electrically conductive connection element (25) on which the propagation means is intended to be connected.

11. The detection terminal according to claim 10, wherein the connection element (25) includes at least one contact portion (28b) adapted to cooperate with the electrically conductive portion of the protection element (29) when the protection element (29) is in its first position.

12. The detection terminal according to any of claims 1 to 11, wherein the fastening element (3) includes a receiving housing (8) arranged to house at least partially the protection element (29) when the protection element (29) is in its first position.

13. The detection terminal according to any of claims 1 to 12, wherein the protection element is electrically conductive and forms the electrically conductive portion.

14. An installation comprising a detection terminal (2) according to any of claims 1 to 13, and propagation means connected to the electrical connection means belonging to the detection terminal, the propagation means being shaped to propagate, when an electrical signal generator is connected to the electrical connection means, an electrical signal along the optically invisible network.

15. A method for detecting an optically invisible network, comprising the steps consisting of:
- providing a detection terminal (2) according to any of claims 1 to 13,
- providing propagation means arranged to propagate an electrical signal along the optically invisible network,
- electrically connecting the propagation means to the electrical connection means belonging to the detection terminal (2),
- fastening the fastening element (3) belonging to the detection terminal (2) in or on a support,
- moving the protection element (29) belonging to the detection terminal (2) in its second position,
- injecting an electrical signal into the electrical connection means belonging to the detection terminal (2), and
- detecting the electromagnetic field generated by the propagation means.
